(19) Europäisches Patentamt
European Patent Office
Office européen des brevets

(11) **EP 3 204 951 B1**

(12) **FASCICULE DE BREVET EUROPEEN**

(45) Date de publication et mention de la délivrance du brevet:
**15.08.2018 Bulletin 2018/33**

(21) Numéro de dépôt: **15775201.5**

(22) Date de dépôt: **06.10.2015**

(51) Int Cl.:
***G21G 1/00*** *(2006.01)*

(86) Numéro de dépôt international:
**PCT/EP2015/072976**

(87) Numéro de publication internationale:
**WO 2016/055434 (14.04.2016 Gazette 2016/15)**

(54) **GÉNÉRATEUR DE RADIO-ISOTOPES À PHASE STATIONNAIRE COMPRENANT DE L'OXYDE DE TITANE**

RADIOISOTOPENGENERATOR MIT EINER STATIONÄREN PHASE MIT TITANOXID

RADIOISOTOPE GENERATOR HAVING A STATIONARY PHASE COMPRISING TITANIUM OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2014 BE 201400747**

(43) Date de publication de la demande:
**16.08.2017 Bulletin 2017/33**

(73) Titulaire: **Institut National Des Radioéléments**
**6220 Fleurus (BE)**

(72) Inventeurs:
• **PARIS, Jérôme**
**4217 Heron (BE)**
• **DIERICKX, Thierry**
**7100 La Louvière (BE)**
• **VANWOLLEGHEM, Philippe**
**1340 Ottignies-LLN (BE)**
• **HOST, Valery**
**5350 Ohey (BE)**
• **DIERICK, Steve**
**7191 Ecaussinnes-Lalaing (BE)**

(74) Mandataire: **Gevers Patents**
**Intellectual Property House**
**Holidaystraat 5**
**1831 Diegem (BE)**

(56) Documents cités:
**US-A1- 2013 312 570    US-A1- 2014 140 462**
**US-B1- 6 337 055**

**Description**

La présente invention se rapporte à une utilisation d'oxyde de titane comme phase stationnaire dans un dispositif de générateur de radio-isotopes et au générateur de radio-isotopes la contenant.

De telles utilisations de phases stationnaires sont bien connues de l'état de la technique, voir par exemple le document WO2013/082699. Ce document divulgue une phase stationnaire comportant des oxydes métalliques inorganiques qui peuvent être utilisés pour isoler un composé d'intérêt d'un échantillon brut ou pour isoler un radio-isotope fille d'un radio-isotope mère. Les oxydes métalliques inorganiques divulgués sont par exemple des oxydes de titane, des oxydes d'aluminium, des oxydes d'étain, des oxydes de zirconium, voire des oxydes de silicium. L'enseignement de ce document réside en réalité dans la comparaison de particules d'oxydes métalliques dont les surfaces externes sont adoucies pour l'élimination des arêtes fragiles des particules de forme irrégulières ayant une taille de particules comprise entre 10 $\mu$m et 300 $\mu$m.

Le document US 2013/0048568 divulgue quant à lui une matière de sorption pour des ions radioactifs utilisables dans la médecine nucléaire, les recherches biomédicales et le diagnostic. Ce document aborde entre autres la problématique du couple $^{68}Ge/^{68}Ga$ dans les applications mentionnées ci-dessus pour lesquelles la teneur en $^{68}Ge$ doit être aussi faible que possible comme contamination du $^{68}Ga$ puisque la durée de demi-vie du $^{68}Ge$ est bien supérieure à celle du $^{68}Ga$. En outre les phases stationnaires dans ce type d'applications doivent permettre de limiter les réactions de coordination avec les contaminants en compétition qui pourraient nuire aux rendements des taux de marquage par le $^{68}Ga$. La matière de sorption divulguée comprend une poudre mésoporeuse et/ou microporeuse cristalline d'un oxyde de zirconium, de titane, d'étain ou de germanium ainsi que leurs combinaisons dans laquelle les tailles de particules sont comprises entre 10 et 200 $\mu$m. Le diamètre moyen des pores mesuré par la méthode BET divulgué est de préférence compris entre 10 et 200 nm. Ce document divulgue également des répartitions de tailles entre mésopores, macropores et micropores.

D'autres enseignements, tels que Chakravarty et al. (Séparation Science and Technology n°48, 2013) enseignent des comparaisons entre divers oxydes tels que les oxydes de zirconium, de titane ou d'aluminium pour la préparation de molécules radio-pharmaceutiques à partir d'un radio-isotope mère. Les oxydes testés sont enseignés comme présents sous la forme de particules nanométrique et aux caractéristiques de porosité élevées. Selon ce document, les phases stationnaires à base d'oxyde d'aluminium nanométrique sont largement préférées alors que celle à base d'oxydes de zirconium ou de titane sont adéquates, mais présentent l'une et l'autre des résultats similaires en termes de «breakthrough», mais nettement inférieurs à l'oxyde d'aluminium.

Le document US 6337055 divulgue un procédé d'extraction de Mo-99 à partir d'une solution d'uranium en ayant recours à un matériau adsorbant inorganique. Le matériau adsorbant qui présente une surface spécifique comprise entre 100 et 350 $m^2/g$ et une taille de particules comprise entre 0,1 et 2,0 mm. Ce matériau adsorbant comprend du dioxyde de titane qui comprend entre 5 et 40 % en mole d'hydroxyde de zirconium.

Bien que ces enseignements semblent prometteurs en termes de possibilités de développer des phases stationnaires pour séparer des radio-isotopes, certaines préoccupations additionnelles doivent encore être prises en considération. D'une part, il faut satisfaire aux normes de pharmacopées, mais il faut également que les radio-isotopes satisfassent aux conditions d'efficacité de séparation et que les phases stationnaires répondent aux exigences de facilité d'utilisation.

L'invention a pour but de pallier les inconvénients de l'état de la technique en procurant une utilisation d'une phase stationnaire dans un générateur de radio-isotopes qui est simple à utiliser tout en permettant d'atteindre des rendements satisfaisants et les normes de pharmacopées.

Pour résoudre ce problème, l'utilisation selon la présente invention est caractérisée en ce que ledit oxyde de titane comprend des particules présentant un $d_{50}$ compris entre 10 et 350 $\mu$m, et présentant une surface spécifique BET comprise entre 30 et 300 $m^2/g$, de préférence supérieure à 60 $m^2/g$.

Au sens de la présente invention, La notation $d_x$ représente un diamètre, exprimé en $\mu$m, par rapport auquel X % des particules d'oxyde de titane mesurées sont plus petites.

Egalement au sens de la présente invention, la surface spécifique BET des particules d'oxyde de titane est la surface spécifique de ces particules mesurée par manométrie d'adsorption d'azote et calculée selon la méthode BET.

Comme on peut le constater, la phase stationnaire utilisée dans le cadre de la présente invention permet d'atteindre des performances très surprenantes en termes de rendement et de simplicité d'utilisation.

En effet, la combinaison des caractéristiques de taille de particules d'oxyde de titane ($d_{50}$) et de la surface spécifique BET des particules dans la phase stationnaire permettent une utilisation favorable pour un dispositif générateur de radio-isotopes qui est particulièrement appropriée pour les applications dans la médecine nucléaire, les recherches biomédicales et le diagnostic.

Selon la présente invention, la taille des particules d'oxyde de titane ($d_{50}$) comprise entre 10 et 350 $\mu$m, ainsi que la surface spécifique BET de celles-ci qui est comprise entre 30 et 300 $m^2/g$ et de préférence supérieure à 60 $m^2/g$, permet d'atteindre un résultat d'élution de radio-isotopes particulièrement favorable à l'élution du radio-isotope fille tout en gardant captif dans la phase stationnaire le radio-isotope mère. Ceci permet d'obtenir une élution spécifique, lors de laquelle le phénomène de «breakthrough» est réduit.

Le phénomène de «breakthrough» correspond à un entraînement indésirable par l'éluant de radio-isotopes mères à partir de la phase stationnaire et se retrouvent dans l'éluat en sortie de générateur de radio-isotopes.

Par les termes «radio-isotope mère» et «radio-isotopes mères», on entend au sens de la présente invention, le radio-isotope ou initialement chargé sur la phase stationnaire ainsi que les radio-isotopes de génération intermédiaire qui fourniront le radio-isotope fille. En effet, dans certains cas, la décomposition du radio-isotope mère produit un composé de temps de demi-vie très court qui se décompose à son tour en radio-isotope fille d'intérêt. Ces radio-isotopes de génération supérieure à ceux des radio-isotopes fille d'intérêt sont appelés «radio-isotope(s) mère(s).

Par les termes «radio-isotope(s) fille(s)», on entend au sens de la présente invention, le(s) radio-isotope(s) issu de la décomposition qui sera la molécule radioactive éluée d'intérêt pour les utilisations dans la médecine nucléaire, les recherches biomédicales et le diagnostic.

Dans l'utilisation selon la présente invention, la taille des particules d'oxyde de titane ainsi que la surface spécifique agissent ensemble de manière synergique pour capturer et retenir le radio-isotope mère, mais également favoriser le passage de l'éluant au travers de la colonne dont le tassement est optimal en partie grâce à la taille des particules d'oxyde de titane. Ces deux caractéristiques ensemble permettent ainsi de minimiser l'entraînement de l'isotope mère en améliorant sa rétention et de maximiser la sortie du radio-isotope fille.

En effet, dans les générateurs de radio-isotopes, l'isotope mère à un temps de demi-vie plus long que le radio-isotope fille utilisé dans les applications médicales. Idéalement, le radio-isotope fille a une durée de vie courte qui permet son administration au corps humain et donc d'en diminuer les effets néfastes dus à la radioactivité.

Le radio-isotope fille est produit continuellement par désintégration du ou des radio-isotopes mères. Lorsqu'une quantité jugée suffisante de radio-isotope fille est présente, celle-ci est alors récupérable par élution. Pour qu'un générateur de radio-isotope trouve une utilisation adéquate dans des applications médicales ou assimilées comme susdit, il est requis que la concentration en isotope mère soit réduite dans l'éluat et par conséquent que le phénomène de «breakthrough» du radio-isotope mère soit aussi faible que possible.

De plus, certains types de phase stationnaire permettent d'atteindre une élution sélective du radio-isotope mère mais permettent seulement de récupérer le radio-isotope fille dans un volume d'éluant sensiblement conséquent, ce qui nécessite une concentration ultérieure. Cette dernière, bien que permettant d'atteindre une concentration adéquate finale en radio-isotope fille par unité de volume récolté, a pour conséquence une diminution de rendement d'extraction, mais également une perte d'activité du radio-isotope fille dans le volume collecté, ce qui impacte l'applicabilité industrielle des phases stationnaires existantes dans les milieux hospitaliers, qui doivent eux aussi atteindre les rendements les plus performants pour les usages envisagés.

La phase stationnaire utilisée selon la présente invention a permis de manière particulièrement surprenante d'atteindre cet objectif en procurant une élution spécifique du radio-isotope fille à partir de la phase stationnaire sur laquelle est adsorbée le radio-isotope mère, c'est-à-dire dans des concentrations élevées, avec un breakthrough du radio-isotope mère réduit dès lors que la combinaison de la taille de particules d'oxyde de titane $d_{50}$ comprise entre 10 et 350 $\mu$m et la surface spécifique BET des particules d'oxyde de titane comprise entre 30 et 300 $m^2/g$, de préférence supérieure à 60 $m^2/g$, agissent, en sus de l'affinité de l'oxyde de titane élevée pour le radio-isotope mère et faible pour le radio-isotope fille, d'une part sur la capture efficace du radio-isotope mère, mais également sur la vitesse d'entrainement du radio-isotope fille qui permet de collecter une fraction de radio-isotopes filles de volume réduit. En outre, la rapidité de l'élution qui permet la collecte d'un volume réduit de haute concentration en radio-isotope fille, permet également de réduire l'entrainement du radio-isotope mère par le passage de l'éluant.

Bien entendu, d'autres facteurs additionnels jouent un rôle sur la performance de l'élution du radio-isotope fille comme la dimension de la colonne, la rondeur des particules, le débit d'éluant appliqué, le débit de sortie imposé potentiellement d'éluat, ...

Selon la présente invention, la phase stationnaire utilisée dans un générateur de radio-isotope permet de collecter un volume réduit d'éluat dans lequel on mesure une activité en radio-isotopes filles comprise dans une plage de valeurs allant de 60,0 % à 100,0 %, de préférence de 70,0 % à 100,0 %, plus particulièrement supérieur à 80,0 %, par rapport à l'activité en radio-isotopes filles sur la colonne au moment de l'élution, dans le générateur, tandis que l'activité en radio-isotopes mères dans l'éluat est quant à elle comprise dans une plage de valeurs allant de 0,0 % à 30,0 % par rapport à l'activité en radio-isotopes filles dudit éluat.

Avantageusement, la phase stationnaire utilisée dans un générateur de radio-isotope permet de collecter un volume réduit d'éluat dans lequel on mesure une activité en radio-isotopes mères comprise dans une plage de valeurs allant de 0,0 % à 20 %, avantageusement de 0,0 % à 10 %, de manière plus préférentielle, de 0,0 % à 5,0 %, de manière encore plus préférentielle, de 0,0 % à 2,0 %, de manière plus avantageuse, de 0,0 % à 1,0 %, par rapport à l'activité en radio-isotopes fille dudit éluat. De manière avantageuse, l'activité en radio-isotope mères est égale à 0,0 mCi.

Les couples de radio-isotopes mères-filles qui peuvent être avantageusement séparés en vue d'applications médicales ou de diagnostic sont par exemple choisis dans le groupe constitué des couples $^{68}Ge/^{68}Ga$, $^{82}Sr/^{82}Rb$,

$^{99}$Mo/$^{99m}$Tc, $^{188}$W/$^{188}$Re, $^{62}$Zn/$^{62}$Cu, $^{113}$Sn/$^{113}$In, $^{228}$Th/$^{212}$Bi, $^{225}$Ac/$^{213}$Bi, $^{90}$Sr/$^{90}$Y, $^{72}$Se/$^{72}$As, $^{44}$Ti/$^{44}$Sc, et $^{224}$Ra/$^{212}$Pb.

Avantageusement, dans l'utilisation selon l'invention de la phase stationnaire, les particules d'oxyde de titane présentent plus spécifiquement un $d_{50}$ compris entre 10 à 100 $\mu$m, plus préférentiellement entre 20 et 80 $\mu$m, avantageusement entre 25 et 60 $\mu$m.

La plage restreinte de taille de particules d'oxyde de titane dans la phase stationnaire selon la présente invention permet ainsi d'obtenir des conditions optimales de tassement permettant d'améliorer la sélectivité de l'élution en faveur du radio-isotope fille collecté dans l'éluat dès lors que ces plages de tailles spécifiques permettent aux espaces inter-particules de guider le flux d'éluant au travers du lit de particules d'oxyde de titane qui réduit l'entrainement du radio-isotope mère par l'éluant mais également d'améliorer la rapidité de l'élution qui permet d'obtenir des fractions d'éluat concentrées en radio-isotope fille.

Dans une forme de réalisation particulière de l'utilisation selon la présente invention, les particules d'oxyde de titane présentent un $d_{95}$ compris entre 10 et 525 $\mu$m. En conséquence, la distribution des tailles de particules d'oxyde de titane est sensiblement ciblée et étroite.

De préférence, dans la présente utilisation, lesdites particules d'oxyde de titane présentent des pores présentant un diamètre, le diamètre moyen des pores étant compris entre 1 et 30 nm, de préférence entre 1 et 20 nm, plus préférentiellement entre 1 et 15 nm, plus particulièrement entre 2 et 8 nm, et avantageusement encore entre 3 et 5 nm.

Dans un mode de réalisation préféré de l'utilisation selon l'invention, les particules d'oxyde de titane présentent un volume poreux BJH supérieur ou égal à 0,1 cm$^3$/g, de préférence égal ou supérieur à 0,12 cm$^3$/g, de préférence égal ou supérieur à 0,15 cm$^3$/g, en particulier égal ou supérieur à 0,20 cm$^3$/g, voire égal ou supérieur à 0,25 cm$^3$/g, de préférence, supérieur ou égal à 0,30 cm$^3$/g, plus particulièrement jusqu'à 0,4 cm$^3$/g, plus avantageusement encore jusqu'à 0,45 cm$^2$/g.

Au sens de la présente invention, par 'volume poreux', on entend le volume des pores mesuré par manométrie d'adsorption d'azote et calculé selon la méthode BJH en désorption.

Dans encore un mode préféré d'utilisation selon l'invention, les particules d'oxyde de titane sont présentes en une proportion en poids d'au moins 50% en poids, par rapport au poids total de phase stationnaire.

Plus particulièrement, selon l'invention, les particules d'oxyde de titane présentent une proportion $d_{90}/d_{10}$ inférieure ou égale à 120 $\mu$m, de préférence inférieure ou égale à 80 $\mu$m, plus particulièrement inférieure ou égale à 60 $\mu$m, avantageusement, inférieure ou égale à 50 $\mu$m.

Avantageusement, les particules d'oxyde de titane présentent une surface spécifique BET supérieure ou égale à 70 m$^2$/g, de préférence supérieure ou égale à 80 m$^2$/g.

Dans une utilisation avantageuse selon la présente invention, ledit oxyde de titane est choisi dans le groupe constitué du TiO, TiO$_2$, T$_1$O$_2$.xH$_2$O (avec x étant un nombre entier compris entre 0 et 10), le dioxyde de titane pouvant être sous la forme cristalline anatase ou rutile, les combinaisons de ceux-ci et les mélanges de ceux-ci

Plus particulièrement, dans l'utilisation selon la présente invention, les particules d'oxyde de titane sont sensiblement sphériques.

D'autres formes d'utilisation suivant l'invention sont indiquées dans les revendications annexées.

L'invention a aussi pour objet un générateur de radio-isotopes comprenant une phase stationnaire contenue dans un réservoir relié à un conduit d'éluant et à une sortie d'éluat.

Typiquement, un générateur de radio-isotopes est utilisé entre autre dans le domaine de la médecine nucléaire pour produire un éluat contenant un radio-isotopes fille à partir d'une phase stationnaire chargée en radio-isotopes mère qui se désintègrent spontanément en radio-isotopes fille lesquels sont destinés à être élués par un éluant.

Ces radio-isotopes fille dans l'éluat sont destinés à être utilisés tels quels ou à se lier à une molécule, comme par exemple une molécule biocompatible (protéine, anticorps, etc.), de façon à former une molécule radio-marquée, résultant de la combinaison du radio-isotope fille avec la molécule, qui est généralement ensuite administrée à un patient par voie injectable, typiquement sous forme d'une solution ou d'une suspension liquide, lorsque la molécule est biocompatible. L'administration du radio-isotope ou de la molécule radio-marquée permet dans ce cas le diagnostic ou le traitement de certains cancers, en fonction du choix du radio-isotope et/ou de la molécule biocompatible.

Dans le cadre particulier de la préparation d'une solution ou d'une suspension comprenant un radio-isotope ou une molécule biocompatible radio-marquée destinée à être administrée à un patient, de nombreuses contraintes surviennent.

En effet, il y a tout d'abord lieu de s'assurer que la production et le prélèvement de l'éluat comprenant les radio-isotopes filles, ainsi que la réaction de marquage de la molécule biocompatible par le radio-isotope fille pour former la molécule radio-marquée, soient réalisées dans des conditions adaptées à l'utilisation, par exemple que les conditions stériles soient applicables. Ceci engendre un besoin d'avoir une phase stationnaire performante qui nécessite le moins de manipulation possible de l'éluat.

Ensuite, comme mentionné ci-dessus, pour que la réaction de marquage soit la plus efficace possible, il est important de disposer d'un éluat qui présente un degré de pureté élevé en radio-isotopes filles, c'est-à-dire un éluat hautement concentré en radio-isotopes filles et dans lequel la présence de contaminants qui peuvent parasiter ou inhiber la réaction de marquage est suffisamment faible que pour ne pas compromettre cette réaction de marquage.

Le générateur selon la présente invention permet de solutionner ces inconvénients en procurant un générateur caractérisé en ce que ladite phase stationnaire comprend des particules d'oxyde de titane présentant un $d_{50}$ compris entre 10 et 350 $\mu$m, et présentant une surface spécifique BET comprise entre 30 et 300 m$^2$/g, de préférence supérieure à 60 m$^2$/g.

Dans le générateur selon la présente invention, ladite phase stationnaire est contenue dans ledit réservoir relié audit conduit d'éluant et à ladite sortie d'éluat est disposée dans un coffrage blindé, de préférence réalisé au moins en partie en un matériau dense, comme par exemple en tungstène ou en plomb.

Dans le générateur selon la présente invention, ladite phase stationnaire est avantageusement chargée en un radio-isotope mère se désintégrant spontanément en un radio-isotope fille.

Dans le générateur selon la présente invention, lesdites particules d'oxyde de titane présentent plus particulièrement un $d_{50}$ compris entre 10 à 100 $\mu$m, plus préférentiellement entre 20 et 80 $\mu$m, avantageusement entre 25 et 60 $\mu$m.

Dans le générateur selon la présente invention, lesdites particules d'oxyde de titane présentent avantageusement un $d_{95}$ compris entre 10 et 525 $\mu$m.

Dans le générateur selon la présente invention, lesdites particules d'oxyde de titane présentent, de préférence, des pores présentant un diamètre, le diamètre moyen des pores étant compris entre 1 et 30 nm, de préférence entre 1 et 20 nm, plus préférentiellement entre 1 et 15 nm, plus particulièrement entre 2 et 8 nm, et avantageusement encore entre 3 et 5 nm.

Dans le générateur selon la présente invention, lesdites particules d'oxyde de titane présentent plus spécifiquement un volume poreux BJH supérieur ou égal à 0,1 cm$^3$/g, de préférence égal ou supérieur à 0,12 cm$^3$/g, de préférence égal ou supérieur à 0,15 cm$^3$/g, en particulier égal ou supérieur à 0,20 cm$^3$/g, voire égal ou supérieur à 0,25 cm$^3$/g, de préférence, supérieur ou égal à 0,30 cm$^3$/g, plus particulièrement jusqu'à 0,4 cm$^3$/g, plus avantageusement encore jusqu'à 0,45 cm$^2$/g.

Dans le générateur selon la présente invention, lesdites particules d'oxyde de titane sont de préférence présentes en une proportion en poids d'au moins 50% en poids, par rapport au poids total de phase stationnaire.

Dans le générateur selon la présente invention, lesdites particules d'oxyde de titane présentent en particulier une proportion $d_{90}/d_{10}$ inférieure ou égale à 120 $\mu$m, de préférence inférieure ou égale à 80 $\mu$m, plus particulièrement inférieure ou égale à 60 $\mu$m, avantageusement, inférieure ou égale à 50 $\mu$m.

De manière avantageuse, le générateur selon l'invention comporte des particules d'oxyde de titane qui présentent une surface spécifique BET supérieure ou égale à 70 m$^2$/g, de préférence supérieure ou égale à 80 m$^2$/g.

Dans le générateur selon la présente invention, ledit oxyde de titane est choisi dans le groupe constitué du TiO, TiO$_2$, TiO$_2$.xH$_2$O (avec x étant un nombre entier compris entre 0 et 10), le dioxyde de titane pouvant être sous la forme cristalline anatase ou rutile, les combinaisons de ceux-ci et les mélanges de ceux-ci.

Dans le générateur selon la présente invention, lesdites particules d'oxyde de titane sont sensiblement sphériques.

D'autres formes de réalisation du générateur suivant l'invention sont indiquées dans les revendications annexées.

D'autres caractéristiques, détails et avantages de l'invention ressortiront de la description donnée ci-après, à titre non limitatif et en faisant référence aux exemples.

**Exemples.-**

**Exemple 1.-**

**Mode opératoire**

*Chargement du générateur*

Le générateur de l'exemple 1 comporte une phase stationnaire d'oxyde de titane chargée par le radio-isotope $^{99}$Mo pour effectuer la production du radio-isotope fille $^{99m}$Tc ainsi que la séparation des radio-isotopes du couple $^{99}$Mo/$^{99m}$Tc (mère/fille) sur cette phase stationnaire comprenant des particules d'oxyde de titane ayant une taille de particules de 35 $\mu$m et une surface spécifique BET de 120 m$^2$/g dans un générateur selon l'invention réalisée en phase aqueuse à pH acide. L'activité chargée sur la phase stationnaire était de 27,9 mCi au temps de chargement $T_0$.

*Test d'élution*

Le réservoir d'éluant est une poche de solution saline de NaCl concentrée à 0,9% en volume.

Le générateur a été élué quotidiennement pendant une période déterminée afin de suivre les rendements d'élution et les taux de relargage en $^{99}$Mo dans chacun des éluats prélevés quotidiennement («*breakthrough*»).

### *Résultats*

Le rendement Y (en %) d'élution s'entend dans le cadre de la présente invention comme le rapport de l'activité du $^{99m}$Tc [A($^{9m}$Tc)$^{el}$ en mCi] dans l'éluat et de l'activité du $^{99m}$Tc [A($^{99m}$Tc)$^{col}$ en mCi] qui est présent sur la colonne au moment de l'élution et est calculé selon la formule suivante :

$$Y \text{ (en \%)} = 100 \times [A(^{99m}Tc)^{el} / A(^{99m}Tc)^{col}]$$

Les taux de relargage en $^{99}$Mo sont donnés en % et correspondent au rapport suivant :

$$R \text{ (en \%)} = 100 \times [A(^{99}Mo)^{el} / A(^{99m}Tc)^{el}],$$

où A($^{99}$Mo)$^{el}$ représente l'activité en $^{99}$Mo dans l'éluat.

Les résultats sont illustrés au tableau 1.-

**Tableau 1.-**Couple $^{99}$Mo/$^{99m}$Tc sur oxyde de titane - essai 1

| Temps T | Y (en %) | R (%)* |
|---|---|---|
| $T_0$ | 99 | < 1,4 10$^{-6}$ |
| $T_0$ + 1 jour | 91 | < 1,6 10$^{-6}$ |
| $T_0$ + 2 jours | 93 | < 2,0 10$^{-6}$ |
| $T_0$ + 8 jours | 95 | < 1,9 10$^{-6}$ |
| $T_0$ + 9 jours | 95 | < 3,2 10$^{-7}$ |
| $T_0$ + 10 jours | 95 | < 1,4 10$^{-6}$ |
| $T_0$ + 11 jours | 97 | < 1,6 10$^{-6}$ |
| $T_0$ + 13 jours | 94 | < 6,4 10$^{-6}$ |
| $T_0$ 14 jours | 96 | < 6,9 10$^{-6}$ |
| $T_0$ + 15 jours | 98 | < 6,8 10$^{-6}$ |
| $T_0$ + 16 jours | 98 | < 7,1 10$^{-6}$ |
| $T_0$ + 17 jours | 95 | < 9,0 10$^{-6}$ |
| $T_0$ + 21 jours | 94 | < 3,0 10$^{-6}$ |
| $T_0$ + 22 jours | 94 | < 2,1 10$^{-6}$ |
| * Les spécifications de pharmacopée européenne (Monographies du pertechnetate de sodium ($^{99m}$Tc) pour injection produit par fission «Eur.Phar. 0124» et Monographies du pertechnetate de sodium ($^{99m}$Tc) pour injection non produit par fission «Eur. Phar. 0283») prévoient une valeur seuil à ne pas dépasser de l'ordre de 0,1 %. | | |

### Exemple 2.-

Le générateur de l'exemple 2 comporte une phase stationnaire d'oxyde de titane chargée par le radio-isotope $^{68}$Ge pour effectuer la production du radio-isotope fille $^{68}$Ga ainsi que la séparation des radio-isotopes du couple $^{68}$Ge/$^{68}$Ga (mère/fille) sur cette phase stationnaire en phase aqueuse à pH acide. La phase stationnaire comprend des particules d'oxyde de titane ayant une taille de particules de 37 $\mu$m et une surface spécifique BET de 125 m$^2$/g. L'activité chargée sur la phase stationnaire était de 4,1 mCi au temps de chargement $T_0$.

*Test d'élution*

Le réservoir d'éluant est une poche de solution à 0, M en HCl

Le générateur a été élué quotidiennement pendant une période déterminée afin de suivre les rendements d'élution et les taux de relargage en $^{68}$Ge dans chacun des éluats prélevés quotidiennement («*breakthrough*»).

Les résultats de rendement et de taux de relargage sont illustrés au tableau 2.- pour l'exemple 1 et l'exemple 2.

**Tableau 2.-**

| Couple // phase stationnaire | Y (en %) | R (en %)* |
|---|---|---|
| $^{68}$Ge/ $^{68}$Ga// oxyde de titane§ | >70%§§§ | $10^{-5}$ - $10^{-6}$§§§§ |
| $^{99}$Mo/$^{99m}$Tc // oxyde de titane§§ | ~95% | ~$10^{-6}$ - $10^{-7}$ |
| § : Valeurs mesurées au temps T = $T_0$<br>§§ : Valeurs moyennes<br>§§§ : Y (en %) = 100 X [A($^{68}$Ga)$^{el}$ / A($^{68}$Ge)$^{col}$]<br>§§§§ : R (en %) = 100 X [A($^{68}$Ge)$^{el}$ / A($^{68}$Ga)$^{el}$], où A($^{68}$Ge)$^{el}$ représente l'activité en $^{68}$Ge dans l'éluat.<br>* Les spécifications de pharmacopée européenne (Monographies du pertechnetate de sodium ($^{99m}$Tc) pour injection produit par fission «Eur.Phar. 0124» ; Monographies du pertechnetate de sodium ($^{99m}$Tc) pour injection non produit par fission « Eur. Phar. 0283 » prévoient une valeur seuil à ne pas dépasser de l'ordre de 0,1 %. Les monographies de « solution de Gallium ($^{68}$Ga) (Chlorure de) pour radiomarquage » « Eur Phar 2464 ») prévoient une valeur seuil à ne pas dépasser de l'ordre de 0,01 %. | | |

Comme le montrent les résultats présentés ci-dessus, l'activité en radio-isotopes mère détectée dans l'éluat est en moyenne inférieure d'un facteur $10^{-7}$ - $10^{-9}$ par rapport à l'activité en radio-isotopes fille dans le même éluat, ce qui signifie une activité en radio-isotopes mère inférieure à 1,0% par rapport à l'activité totale en radio-isotopes mères et filles de l'éluat, ce qui est tout à fait remarquable.

**Exemple comparatif 1.-**

Une phase stationnaire à base d'oxyde de titane présentant une taille moyenne de particule $d_{50}$ inférieure à 10 μm a été testée pour déterminer son affinité pour le Germanium. Dans cet exemple comparatif, la perte de charge était trop importante requérant la nécessité d'une pompe pour permettre une élution correcte. En conséquence, la mise en oeuvre d'une telle phase stationnaire n'est pas réalisable.

**Exemple comparatif 2.-**

Une phase stationnaire à base d'oxyde de titane présentant une taille moyenne de particule $d_{50}$ d'environ 600 μm a été testée pour déterminer son affinité pour le Germanium. Dans cet exemple comparatif, le nombre de plateaux théoriques de la colonne était trop peu élevé et la capacité de cette colonne était trop faible. En conséquence, la mise en oeuvre d'une telle phase stationnaire n'est pas réalisable.

**Exemple comparatif 3.-**

Une phase stationnaire à base de dioxyde de silicium présentant une taille moyenne de particule $d_{50}$ d'environ 50 μm, une surface spécifique BET de 487 m$^2$/g et un volume poreux BJH de 0,81 cm$^3$/g a été testée pour déterminer son affinité pour le Germanium. Les particules de dioxyde de silicium présentent une forme sphérique. Selon cet exemple comparatif, le coefficient de distribution ($K_D$) est égal à 4.

**Exemple 3.-**

Une phase stationnaire à base d'oxyde de titane présentant une taille moyenne de particule $d_{50}$ de 25 μm, une surface spécifique BET de 125 m$^2$/g et un volume poreux BJH de 0,23 cm$^3$/g a été testée pour déterminer son affinité pour le Germanium. En effet, plus celle-ci sera élevée, moins le breakthrough en $^{68}$Ge attendu dans l'éluat du générateur sera important. Ceci a été réalisé par la mesure des coefficients de distribution ($K_D$) de cet élément (une quantité connue de $^{68}$Ge a été utilisée) entre la phase solide étudiée et une solution aqueuse à pH acide.

Le $K_D$ (exprimé en ml/g) est donné par la relation :

$$K_d = [(A_i - A_{éq})V]/[A_{éq} \, m]$$

Avec :

$A_i$ = activité initiale $^{68}$Ge présente dans 1ml de solution aqueuse
$A_{éq}$ = activité à l'équilibre dans 1ml de solution aqueuse (= activité résiduelle non adsorbée)
V = volume total de solution aqueuse utilisée (ml)
m = quantité de phase stationnaire utilisée (g)

Le coefficient de distribution ainsi que les caractéristiques de la phase stationnaire sont présentées au tableau 3.-

**Tableau 3.-**

| Adsorption de $^{68}$Ge dans une phase aqueuse acide temps d'équilibrage de 5 heures | | | | |
|---|---|---|---|---|
| Phase stationnaire | Surface spécifique BET ($m^2$/g) mesurée | Diamètre des pores (Å) mesuré | Volume poreux BJH ($cm^3$/g) mesuré | $K_D$ (ml/g) |
| Oxyde de titane 25 $\mu$m | 125 | 63 | 0,23 | 1783 |

**Exemple 4.-**

Une phase stationnaire à base d'oxyde de titane présentant une taille moyenne de particule $d_{50}$ annoncée de 80 $\mu$m, une surface spécifique BET de 97 $m^2$/g et un volume poreux BJH de 0,25 $cm^3$/g a été testée pour déterminer son affinité pour le Germanium. Le coefficient de distribution ($K_D$) de cet élément (une quantité connue de $^{68}$Ge a été utilisée) entre la phase solide étudiée et une solution aqueuse à pH acide a été déterminé comme dans l'exemple 3.
Le coefficient de distribution ainsi que les caractéristiques de la phase stationnaire sont présentées au tableau 4.

**Tableau 4.-**

| Adsorption de $^{68}$Ge dans une phase aqueuse acide temps d'équilibrage de 5 heures | | | | |
|---|---|---|---|---|
| Phase stationnaire | Surface spécifique BET ($m^2$/g) mesurée | Diamètre des pores (Å) mesuré | Volume poreux BJH ($cm^3$/g) mesuré | $K_D$ (ml/g) |
| Oxyde de titane 80 $\mu$m | 97 | 78 | 0,237 | 425 |

**Exemple comparatif 4.-**

Une phase stationnaire à base d'oxyde de titane présentant une taille moyenne de particule $d_{50}$ annoncée de 80 $\mu$m, une surface spécifique BET de 12 $m^2$/g, un diamètre des pores de 300 Å et un volume poreux BJH de 0,055 $cm^3$/g a été testée pour déterminer son affinité pour le Germanium. Le coefficient de distribution ($K_D$) de cet élément (une quantité connue de $^{68}$Ge a été utilisée) entre la phase solide étudiée et une solution aqueuse à pH acide a été déterminé comme dans l'exemple 3.
Le coefficient de distribution ainsi que les caractéristiques de la phase stationnaire sont présentées au tableau 5.

**Tableau 5.-**

| Adsorption de $^{68}$Ge dans une phase aqueuse acide temps d'équilibrage de 5 heures | | | | |
|---|---|---|---|---|
| Phase stationnaire | Surface spécifique BET ($m^2$/g) mesurée | Diamètre des pores (Å) | Volume poreux BJH ($cm^3$/g) mesuré | $K_D$ (ml/g) |
| Oxyde de titane 80 $\mu$m | 12 | 300 | 0,055 | 100 |

## Exemple comparatif 5.-

Une phase stationnaire à base d'oxyde de titane présentant une taille moyenne de particule $d_{50}$ annoncée de 80 $\mu$m, une surface spécifique BET de 7 m$^2$/g, un diamètre des pores de 2000 A et un volume poreux BJH de 0,037 cm$^3$/g a été testée pour déterminer son affinité pour le Germanium. Le coefficient de distribution ($K_D$) de cet élément (une quantité connue de $^{68}$Ge a été utilisée) entre la phase solide étudiée et une solution aqueuse à pH acide a été déterminé comme dans l'exemple 3.

Le coefficient de distribution ainsi que les caractéristiques de la phase stationnaire sont présentées au tableau 6.

**Tableau 6.-**

| Adsorption de $^{68}$Ge dans une phase aqueuse acide temps d'équilibrage de 5 heures | | | |
|---|---|---|---|
| Phase stationnaire | Surface spécifique BET (m$^2$/g) mesurée | Diamètre des pores (A) | Volume poreux BJH (cm$^3$/g) mesuré | $K_D$) (ml/g) |
| Oxyde de titane 80 $\mu$m | 7 | 2000 | 0,037 | 60 |

## Exemple 5.-

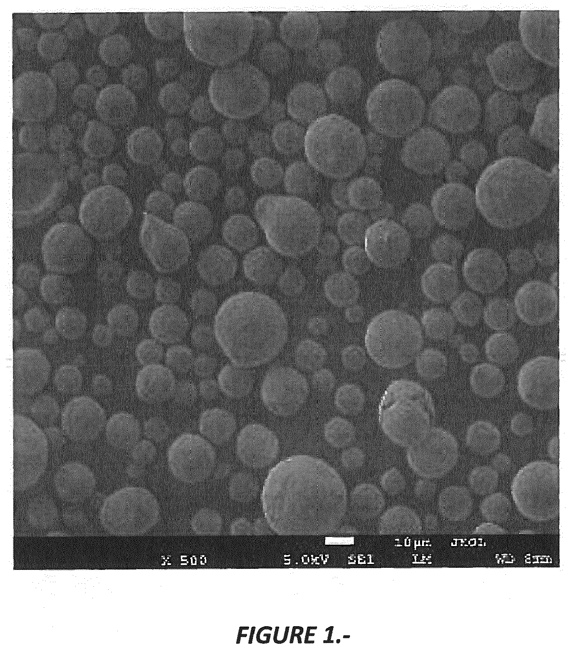

Une phase stationnaire à base d'oxyde de titane présentant une taille moyenne de particule $d_{50}$ de 80 $\mu$m, une surface spécifique BET annoncée de 108 m$^2$/g et dans laquelle les particules sont sensiblement sphériques a été testée pour déterminer le breakthrough initial [68]Ge. Le Breakthrough $^{68}$Ge a été déterminé comme dans l'exemple 2 et montrait des valeurs inférieures à 4.10$^{-5}$ (R en %). Les particules d'oxyde de titane sont montrées à la figure 1 (photographie Microscopie électronique à balayage).

## Exemple comparatif 6.-

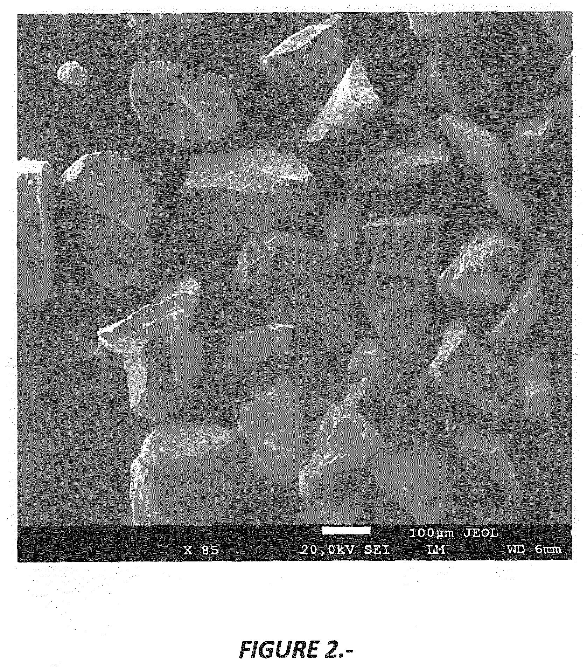

Une phase stationnaire à base d'oxyde de titane présentant une taille moyenne de particule $d_{50}$ de 152 $\mu$m, une surface spécifique BET annoncée de 259 m$^2$/g et dans laquelle les particules sont de forme non sphériques et irrégulières a été testée pour déterminer le breakthrough initial [68]Ge. Le Breakthrough $^{68}$Ge a été déterminé comme dans l'exemple 2 et montrait des valeurs comprises entre 1.10$^{-2}$ et 2.10$^{-2}$ (R en %). Les particules d'oxyde de titane sont montrées à la figure 2 (photographie Microscopie électronique à balayage).

Comme on peut le constater, les performances d'élution et en termes de breakthrough sont moins bonnes pour les particules non sphériques par rapport à l'exemple 6, et ce, malgré une surface spécifique BET bien supérieure. De plus, le rendement d'élution $^{68}$Ga est également plus faible dans l'exemple comparatif 6 pour les particules d'oxyde de titane non-sphériques (<30%) par rapport à celui pour les particules d'oxyde de titane sphériques (70%).

## Exemple comparatif 7.-

Le tableau 7 représente les résultats obtenus pour 4 types de phases stationnaires à base d'oxyde de titane.

La première phase stationnaires est constituée d'oxyde de titane présentant une taille de particules de 37 $\mu$m, une surface spécifique BET de 125 m$^2$/g, un diamètre des pores de 64 A, un volume poreux BJH de 0,248 cm$^3$/g et un coefficient de distribution (Kd) de 2245 ml/g.

La deuxième phase stationnaire est constituée d'oxyde de titane présentant une taille de particules de 105 $\mu$m, une surface spécifique BET de 140 m$^2$/g, un diamètre des pores de 60 A, un volume poreux BJH de 0,223 cm$^3$/g et un coefficient de distribution (Kd) de 1813 ml/g.

La troisième phase stationnaires est constituée d'oxyde de titane présentant une taille de particules de 160 $\mu$m, une surface spécifique BET de 130 m$^2$/g, un diamètre des pores de 58 A, un volume poreux BJH de 0,240 cm$^3$/g et un coefficient de distribution (Kd) de 1922 ml/g.

La quatrième phase stationnaires est constituée d'oxyde de titane présentant une taille de particules de 265 $\mu$m, une surface spécifique BET de 125 m$^2$/g, un diamètre des pores de 61 A, un volume poreux BJH de 0,220 cm$^3$/g et un coefficient de distribution (Kd) de 1940 ml/g.

**Tableau 7.-**

| Phase stationnaire | Surface spécifique BET ($m^2$/g) mesurée | Diamètre des pores (A) | Volume poreux BJH ($cm^3$/g) mesuré | $K_D$ (ml/g) |
|---|---|---|---|---|
| Oxyde de titane 37 $\mu$m | 125 | 64 | 0,248 | 2245 |
| Oxyde de titane 105 $\mu$m | 140 | 60 | 0,223 | 1813 |
| Oxyde de titane 160 $\mu$m | 130 | 58 | 0,240 | 1922 |
| Oxyde de titane 265 $\mu$m | 125 | 61 | 0,220 | 1940 |

Au vu du tableau 7, il apparaît que l'augmentation de la taille de particules d'oxyde de titane n'influence pas de manière directe et proportionnelle les caractéristiques de la phase stationnaire en terme de surface spécifique, de diamètre des pores ou encore de volume poreux.

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Utilisation d'oxyde de titane comme phase stationnaire dans un dispositif de générateur de radio-isotopes, **caractérisée en ce que** ledit oxyde de titane comprend des particules présentant un $d_{50}$ compris entre 10 et 350 $\mu$m, et présentant une surface spécifique BET comprise entre 30 et 300 $m^2$/g, de préférence supérieure à 60 $m^2$/g.

2. Utilisation selon la revendication 1, dans laquelle les particules d'oxyde de titane présentent un $d_{50}$ compris entre 10 à 100 $\mu$m, plus préférentiellement entre 20 et 80 $\mu$m, avantageusement entre 25 et 60 $\mu$m.

3. Utilisation selon l'une quelconque des revendications 1 à 2, dans laquelle lesdites particules d'oxyde de titane présentent des pores présentant un diamètre, le diamètre moyen des pores étant compris entre 1 et 30 nm, de préférence entre 1 et 20 nm, plus préférentiellement entre 2 et 18 nm, et plus particulièrement entre 4 et 16 nm.

4. Utilisation selon l'une quelconque des revendications 1 à 3, dans laquelle les particules d'oxyde de titane présentent un volume poreux BJH supérieur ou égal à 0,1 $cm^3$/g, de préférence égal ou supérieur à 0,12 $cm^3$/g, en particulier égal ou supérieur à 0,15 $cm^3$/g, voire égal ou supérieur à 0,20 $cm^3$/g, de préférence, supérieur ou égal à 0,25 $cm^3$/g et plus particulièrement jusqu'à 0,4 $cm^3$/g.

5. Utilisation selon l'une quelconque des revendications 1 à 4, dans laquelle les particules d'oxyde de titane présentent une surface spécifique BET supérieure ou égale à 70 $m^2$/g, de préférence supérieure ou égale à 80 $m^2$/g.

6. Utilisation selon l'une quelconque des revendications 1 à 5, dans laquelle les particules d'oxyde de titane sont présentes en une proportion en poids d'au moins 50% en poids, par rapport au poids total de phase stationnaire.

7. Utilisation selon l'une quelconque des revendications 1 à 6, dans laquelle les particules d'oxyde de titane présentent une proportion $d_{90}/d_{10}$ inférieure ou égale à 120 $\mu$m, de préférence inférieure ou égale à 80 $\mu$m, plus particulièrement inférieure ou égale à 60 $\mu$m, avantageusement, inférieure ou égale à 50 $\mu$m.

8. Utilisation selon l'une des revendications précédentes, dans laquelle les particules d'oxyde de titane sont sensiblement sphériques.

9. Générateur de radio-isotopes comprenant une phase stationnaire contenue dans un réservoir relié à un conduit d'éluant et à une sortie d'éluat, **caractérisé en ce que** ladite phase stationnaire comprend des particules d'oxyde de titane présentant un $d_{50}$ compris entre 10 et 350 $\mu$m, et présentant une surface spécifique BET comprise entre 30 et 300 $m^2$/g, de préférence supérieure à 60 $m^2$/g.

10. Générateur selon la revendication 9, dans lequel ladite phase stationnaire contenue dans ledit réservoir relié audit conduit d'éluant et à ladite sortie d'éluat est disposés dans un coffrage blindé, de préférence réalisé au moins en partie en un matériau dense, comme par exemple en tungstène ou en plomb.

11. Générateur selon la revendication 9 à 10, dans lequel lesdites particules d'oxyde de titane présentent un $d_{50}$ compris entre 10 à 100 $\mu$m, plus préférentiellement entre 20 et 80 $\mu$m, avantageusement entre 25 et 60 $\mu$m.

12. Générateur selon l'une quelconque des revendications 9 à 11, dans lequel lesdites particules d'oxyde de titane présentent des pores présentent des pores présentant un diamètre, le diamètre moyen des pores étant compris entre 1 et 30 nm, de préférence entre 1 et 20 nm, plus préférentiellement entre 2 et 18 nm, et plus particulièrement entre 4 et 16 nm.

13. Générateur selon l'une quelconque des revendications 9 à 12, dans lequel lesdites particules d'oxyde de titane présentent un volume poreux BJH supérieur ou égal à 0,1 cm$^3$/g, de préférence égal ou supérieur à 0,12 cm$^3$/g, en particulier égal ou supérieur à 0,15 cm$^3$/g, voire égal ou supérieur à 0,20 cm$^3$/g, de préférence, supérieur ou égal à 0,25 cm$^3$/g et plus particulièrement jusqu'à 0,4 cm$^3$/g.

14. Générateur selon l'une quelconque des revendications 9 à 13, dans lequel lesdites particules d'oxyde de titane sont présentes en une proportion en poids d'au moins 50% en poids, par rapport au poids total de phase stationnaire.

15. Générateur selon l'une quelconque des revendications 9 à 14, dans lequel lesdites particules d'oxyde de titane sont sensiblement sphériques.

**Patentansprüche**

1. Verwendung von Titanoxid als stationäre Phase in einer Radioisotopengeneratorvorrichtung, **dadurch gekennzeichnet, dass** das Titanoxid Teilchen umfasst, die eine $d_{50}$ zwischen 10 und 350 $\mu$m aufweisen und eine spezifische BET-Oberfläche zwischen 30 und 300 m$^2$/g, vorzugsweise von mehr als 60 m$^2$/g aufweisen.

2. Verwendung nach Anspruch 1, wobei die Titanoxidteilchen eine $d_{50}$ zwischen 10 und 100 $\mu$m, mehr bevorzugt zwischen 20 und 80 $\mu$m, vorteilhafterweise zwischen 25 und 60 $\mu$m aufweisen.

3. Verwendung nach einem der Ansprüche 1 bis 2, wobei die Titanoxidteilchen Poren aufweisen, die einen Durchmesser aufweisen, wobei der mittlere Durchmesser der Poren zwischen 1 und 30 nm, vorzugsweise zwischen 1 und 20 nm, mehr bevorzugt zwischen 2 und 18 nm und ganz besonders zwischen 4 und 16 nm liegt.

4. Verwendung nach einem der Ansprüche 1 bis 3, wobei die Titanoxidteilchen ein BJH-Porenvolumen von größer gleich 0,1 cm$^3$/g, vorzugsweise größer gleich 0,12 cm$^3$/g, insbesondere größer gleich 0,15 cm$^3$/g, sogar größer gleich 0,20 cm$^3$/g, vorzugsweise größer gleich 0,25 cm$^3$/g und ganz besonders bis zu 0,4 cm$^3$/g aufweisen.

5. Verwendung nach einem der Ansprüche 1 bis 4, wobei die Titanoxidteilchen eine spezifische BET-Oberfläche von größer gleich 70 m$^2$/g, vorzugsweise größer gleich 80 m$^2$/g aufweisen.

6. Verwendung nach einem der Ansprüche 1 bis 5, wobei die Titanoxidteilchen in einem Gewichtsanteil von mindestens 50 Gew.-% vorliegen, bezogen auf das Gesamtgewicht der stationären Phase.

7. Verwendung nach einem der Ansprüche 1 bis 6, wobei die Titanoxidteilchen ein Verhältnis $d_{90}/d_{10}$ von kleiner gleich 120 $\mu$m, vorzugsweise kleiner gleich 80 $\mu$m, ganz besonders kleiner gleich 60 $\mu$m, vorteilhafterweise kleiner gleich 50 $\mu$m aufweisen.

8. Verwendung nach einem der vorhergehenden Ansprüche, wobei die Titanoxidteilchen im Wesentlichen sphärisch sind.

9. Radioisotopengenerator, der eine stationäre Phase umfasst, die in einem Reservoir enthalten ist, das mit einer Eluentenleitung und einem Eluataustritt verbunden ist, **dadurch gekennzeichnet, dass** die stationäre Phase Titanoxidteilchen umfasst, die eine $d_{50}$ zwischen 10 und 350 $\mu$m aufweisen und eine spezifische BET-Oberfläche zwischen 30 und 300 m$^2$/g, vorzugsweise von mehr als 60 m$^2$/g aufweisen.

**10.** Generator nach Anspruch 9, wobei die stationäre Phase, die in dem Reservoir enthalten ist, das mit der Eluentenleitung und dem Eluataustritt verbunden ist, in einer abgeschirmten Verschalung angeordnet ist, die vorzugsweise zumindest zum Teil aus einem dichten Material, wie beispielsweise aus Wolfram oder aus Blei, hergestellt ist.

**11.** Generator nach Anspruch 9 bis 10, wobei die Titanoxidteilchen eine $d_{50}$ zwischen 10 bis 100 $\mu$m, mehr bevorzugt zwischen 20 und 80 $\mu$m, vorteilhafterweise zwischen 25 und 60 $\mu$m aufweisen.

**12.** Generator nach einem der Ansprüche 9 bis 11, wobei die Titanoxidteilchen Poren aufweisen, die einen Durchmesser aufweisen, wobei der mittlere Durchmesser der Poren zwischen 1 und 30 nm, vorzugsweise zwischen 1 und 20 nm, mehr bevorzugt zwischen 2 und 18 nm und ganz besonders zwischen 4 und 16 nm liegt.

**13.** Generator nach einem der Ansprüche 9 bis 12, wobei die Titanoxidteilchen ein BJH-Porenvolumen von größer gleich 0,1 cm$^3$/g, vorzugsweise größer gleich 0,12 cm$^3$/g, insbesondere größer gleich 0,15 cm$^3$/g, sogar größer gleich 0,20 cm$^3$/g, vorzugsweise größer gleich 0,25 cm$^3$/g und ganz besonders bis zu 0,4 cm$^3$/g aufweisen.

**14.** Generator nach einem der Ansprüche 9 bis 13, wobei die Titanoxidteilchen in einem Gewichtsanteil von mindestens 50 Gew.-% vorliegen, bezogen auf das Gesamtgewicht der stationären Phase.

**15.** Generator nach einem der Ansprüche 9 bis 14, wobei die Titanoxidteilchen im Wesentlichen sphärisch sind.

**Claims**

**1.** The use of titanium oxide as a stationary phase in a radio-isotope generator device, **characterized in that** said titanium oxide comprises particles having a $d_{50}$ comprised between 10 and 350 $\mu$m, and having a BET specific surface area comprised between 30 and 300 m$^2$/g, preferably greater than 60 m$^2$/g.

**2.** The use according to claim 1, wherein the titanium oxide particles have a $d_{50}$ comprised between 10 to 100 $\mu$m, more preferentially between 20 and 80 $\mu$m, advantageously between 25 and 60 $\mu$m.

**3.** The use according to any of claims 1 to 2, wherein said titanium oxide particles have pores having a diameter, the average pore diameter being comprised between 1 and 30 nm, preferably between 1 and 20 nm, more preferentially between 2 and 18 nm, and more particularly between 4 and 16 nm.

**4.** The use according to any of claims 1 to 3, wherein the titanium oxide particles have a BJH pore volume greater than or equal to 0.1 cm$^3$/g, preferably equal to or greater than 0.12 cm$^3$/g, in particular equal to or greater than 0.15 cm$^3$/g, or even equal to or greater than 0.20 cm$^3$/g, preferably, greater than or equal to 0.25 cm$^3$/g and more particularly up to 0.4 cm$^3$/g.

**5.** The use according to any of claims 1 to 4, wherein the titanium oxide particles have a BET specific surface area greater than or equal to 70 m$^2$/g, preferably greater than or equal to 80 m$^2$/g.

**6.** The use according to any of claims 1 to 5, wherein the titanium oxide particles are present in a weight proportion of at least 50% by weight, based on the total weight of stationary phase.

**7.** The use according to any of claims 1 to 6, wherein the titanium oxide particles have a proportion $d_{90}/d_{10}$ of less than or equal to 120 $\mu$m, preferably less than or equal to 80 $\mu$m, more particularly less than or equal to 60 $\mu$m, advantageously less than or equal to 50 $\mu$m.

**8.** The use according to one of the preceding claims, wherein the titanium oxide particles are substantially spherical.

**9.** A radio-isotope generator comprising a stationary phase contained in a tank connected to an eluent conduit and an eluate exit, **characterized in that** said stationary phase comprises particles of titanium oxide having a $d_{50}$ comprised between 10 and 350 $\mu$m, and having a BET specific surface area comprised between 30 and 300 m$^2$/g, preferably greater than 60 m$^2$/g.

**10.** The generator according to claim 9, wherein said stationary phase contained in said tank connected to said eluent conduit and to said eluate outlet is positioned in a shielded box, preferably at least partly made in a dense material, such as for example tungsten or lead.

11. The generator according to claim 9 to 10, wherein said titanium oxide particles have a $d_{50}$ comprised between 10 to 100 $\mu$m, more preferentially between 20 and 80 $\mu$m, advantageously between 25 and 60 $\mu$m.

12. The generator according to any of claims 9 to 11, wherein said titanium oxide particles have pores having a diameter, the average pore diameter being comprised between 1 and 30 nm, preferably between 1 and 20 nm, more preferentially between 2 and 18 nm, and more particularly between 4 and 16 nm.

13. The generator according to any of claims 9 to 12, wherein said titanium oxide particles have a BJH pore volume greater than or equal to 0.1 cm$^3$/g, preferably equal to or greater than 0.12 cm$^3$/g, in particular equal to or greater than 0.15 cm$^3$/g, or even equal to or greater than 0.20 cm$^3$/g, preferably, greater than or equal to 0.25 cm$^3$/g and more particularly up to 0.4 cm$^3$/g.

14. The generator according to any of claims 9 to 13, wherein said titanium oxide particles are present in a weight proportion of at least 50% by weight, based on the total weight of stationary phase.

15. The generator according to any of claims 9 to 14, wherein said titanium oxide particles are substantially spherical.

**FIGURE 1.-**

FIGURE 2.-

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013082699 A
- US 20130048568 A

- US 6337055 B

**Littérature non-brevet citée dans la description**

- **CHAKRAVARTY et al.** *Séparation Science and Technology,* 2013